Europäisches Patentamt

European Patent Office

Office européen des brevets

(11) Veröffentlichungsnummer: **0 316 596 A2**

## (12) EUROPÄISCHE PATENTANMELDUNG

(21) Anmeldenummer: 88117308.2

(22) Anmeldetag: 18.10.88

(51) Int. Cl.⁴ **B01D 53/36 , F01N 3/28 , B01J 35/04**

(30) Priorität: 13.11.87 DE 3738537

(43) Veröffentlichungstag der Anmeldung:
24.05.89 Patentblatt 89/21

(84) Benannte Vertragsstaaten:
**DE FR GB IT**

(71) Anmelder: **Süddeutsche Kühlerfabrik Julius Fr. Behr GmbH & Co. KG**
**Mauserstrasse 3**
**D-7000 Stuttgart 30(DE)**

(72) Erfinder: **Humpolik, Bohumil**
**Oldenheimstrasse 19**
**D-7140 Ludwigsburg(DE)**

(74) Vertreter: **Wilhelm, Hans-Herbert, Dr.-Ing. et al**
**Wilhelm & Dauster Patentanwälte**
**Hospitalstrasse 8**
**D-7000 Stuttgart 1(DE)**

(54) **Verfahren und Vorrichtung zur Herstellung eines Trägerkörpers für einen katalytischen Reaktor.**

(57) Um Wärmespannungen zwishen dem Mantelrohr und dem gewickelten Metallträgerkörper eines Abgaskatalysators abzubauen, deren Temperaturen im Betrieb stark unterschiedlich sind, ist es bekannt, den in einem Mantelrohr befestigten Ringverbund von Metallbändern mit in Längsrichtung verlaufenden Schlitzen zu versehen. Diese Herstellungsart ist aufwendig.

Mit dem neuen Verfahren wird vorgeschlagen, Einschnitte bereits vor dem Wickeln oder Falten des Trägerkörpers unmittelbar in die Metallbänder einzubringen, so daß eine nachträgliche Bearbeitung überflüssig wird. So hergestellte Trägerkörper weisen eine Vielzahl innerhalb des Ringverbundes verlaufender Einschnitte auf, die ebenfalls den Aufbau von Wärmespannungen unterbinden können.

Die neuen Trägerkörper werden für Abgaskatalysatoren von Kraftfahrzeugen verwendet.

Fig. 1

## Verfahren und Vorrichtung zur Herstellung eines Trägerkörpers für einen katalytischen Reaktor

Die Erfindung betrifft ein Verfahren und eine Vorrichtung zur Herstellung eines Trägerkörpers für einen katalytischen Reaktor zur Abgasreinigung, insbesondere von Verbrennungsmotoren in Kraftfahrzeugen, bei dem gewellte oder gewellte und glatte Metallbänder zu aneinandergrenzenden Lagen gewickelt oder gefaltet und mit quer zu ihrer Längsrichtung verlaufenden Schlitzen versehen werden.

Es ist ein Verfahren dieser Art bekannt (DE-OS 33 11 654), bei dem ein Katalysator-Trägerkörper aus glatten und/oder gewellten Blechbändern spiralig aufgewickelt wird, der dann in einem Mantelrohr befestigt wird. Der so geschaffene Ringverband des Trägerkörpers wird dann mit bekannten Trenn- und Abtragungsmethoden, wie z.B. Laserstrahlbrennen oder Funkenerosion mit Schlitzen in dem Bereich der gewickelten Metallbänder versehen, die in Längsrichtung durch den gewickelten Teil des Trägerkörpers verlaufen und etwa radial oder in Richtung von Sehnen angeordnet sind. Durch diese Maßnahme kann der innere Ringverband in mehrere Sektoren oder Segmente unterteilt werden, die frei sind von einer spannungserzeugenden thermischen Ausdehnung. Bekanntlich können Trägerkörper für katalytische Reaktoren im Betrieb durch die katalytische Umsetzung des Abgases von ca. 500° C Betriebstemperatur örtlich über mehr oder minder große Bereiche auf Temperaturen über 900° C erhitzt werden. Das sie umgebende dickwandige Mantelrohr behält aber seine relativ niedrige Betriebstemperatur von ca. 300° G über längere Zeitdauer bei. Die dadurch zu erwartenden Wärmespannungen, die zu einem Lösen des gewickelten Körpers aus dem Mantelrohr führen können, können durch die Anordnung solcher Schlitze vermieden werden.

Nachteil ist der verhältnismäßig große Aufwand zur Anordnung solcher Schlitze.

Der Erfindung liegt die Aufgabe zugrunde, ein Verfahren der einangsk genannten Art so auszubilden, daß dem gewickelten oder gefalteten Verbund von Metallbändern die Möglichkeit einer thermischen Ausdehnung gegeben wird, ohn daß der Trägerkörper nach der Herstellung nochmals bearbeitet werden muß.

Zur Lösung dieser Aufgabe wird vorgesehen, daß die Schlitze zunächst in Form von Einschnitten unmittelbar in den Metallbändern angebracht werden, und daß die Metallbänder erst danach zu ihrer Endform gewickelt oder gefaltet werden. Durch diese Maßnahme erhält jede einzelne Lage des oder der gewickelten Metallbänder eine bestimmte Ausdehnungsfreiheit. Der fertige Trägerkörper, der nach einem solchen Verfahren hergestellt ist, weist zwar keine durchgehenden, etwa radial oder in Form von Sehnen verlaufenden Schlitze auf, besitzt aber eine Vielzahl von in der Regel relativ ungleichmäßig auf dem Querschnitt verteilten Schlitzen, die jeder einzelnen Lage die Ausdehnungsmöglichkeit geben und so auch verhindern, daß der fertige Trägerkörper durch Wärmespannungen in seinem Aufbau beschädigt werden kann. Die Herstellung des neuen Trägerkörpers ist verhältnismäßig einfach, weil es ausreicht, bei einer entsprechenden Herstellungsvorrichtung, wie sie auch bisher schon zum Wickeln, oder zum Falten von Metallbändern verwendet wird, der eigentlichen Wickel- oder Faltvorrichtung unmittelbar ein Schneidwalzenpaar vorzulagern, mit dem das zu verarbeitende Metallband oder die zu wickelnden oder zu faltenden Metallbänder in der gewünschten Weise eingeschnitten werden.

Die Einschnitte selbst können in verschiedener Art vorgenommen werden. Die Unteransprüche 2 bis 14 umreißen jeweils vorteilhafte Möglichkeiten der Anbringung solcher Einschnitte. Dabei ist es nicht nur möglich, die Einschnitte jeweils von den Längsrändern der Bänder aus nach innen zu verlegen, sondern es ist auch möglich, die Bänder ausschließlich in ihrem Mittelbereich einzuschneiden. In allen Fällen geben sich für die Bänder Ausdehnungsmöglichkeiten, die Beschädigungen des Trägerkörpers durch Wärmedehnungen unterbinden.

In der Zeichnung sind Ausführungsbeispiele einer Vorrichtung zur Durchführung des erfindungsgemäßen Verfahrens und Ausführungsbeispiele für verschiedene Anordnungen der Einschnitte in den Bändern gezeigt, die im folgenden erläutert werden. Es zeigen:

Fig. 1 eine schematische Darstellung einer Vorrichtung zur Herstellung eines Trägerkörpers für einen katalytischen Reaktor nach dem erfindungsgemäßen Verfahren,

Fig. 2, 3, 4, 5, 6, 7, 8, 9, 10 und 11 jeweils Ausschnitte eines Bandes, das vor dem Wickeln oder Falten mit Einschnitten versehen worden ist,

Fig. 12 eine perspektivische, aber schematische Darstellung eines zu Zylinderform gewickelten Metallbandes in der Ausführungsform der Fig. 11 und

Fig. 13 eine Stirnansicht des Zylinderkörpers der Fig. 12, der in ein Mantelrohr eingeschoben ist.

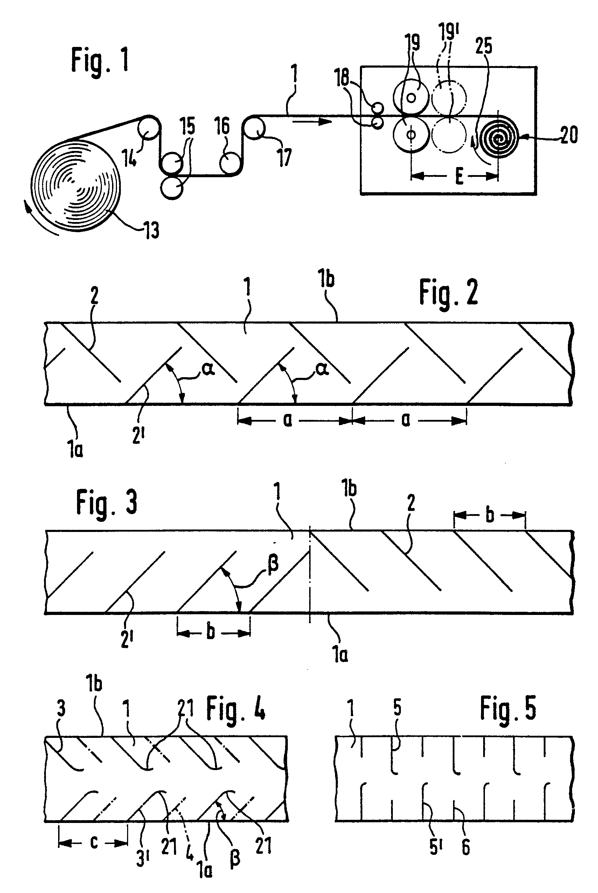

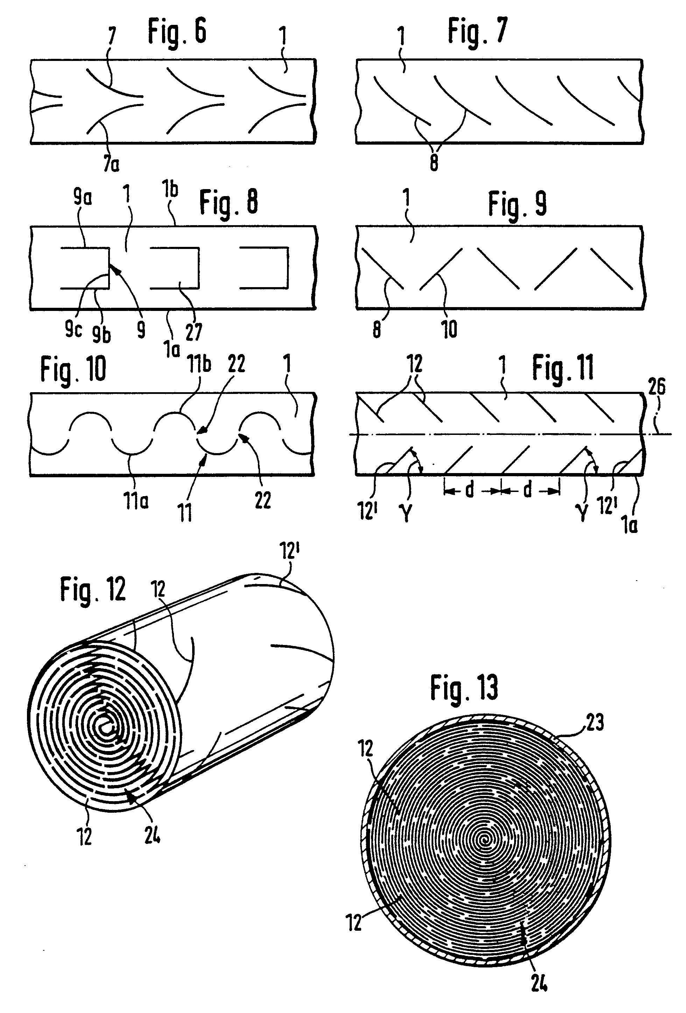

In Fig. 1 ist eine Vorrichtung gezeigt, mit der das erfindungsgemäße Verfahren durchgeführt werden kann. Dort wird ein zunächst glattes Metallband von einem Coil (13) abgewickelt und über eine Umlenkwalze (14) eines Prägewalzenpaar (15) zugeführt, das das zunächst noch glatte Band mit einer Wellung ver sieht, die beispielsweise rechtekkig sein kann, durch die Anordnung nachgeordneter Umlenk- oder Stauchwalzen (16, 17) eine Wellung mit einem etwa trapezförmigen Querschnitt erhält, der beim Aufeinanderwickeln dieses Metallbandes (1) dafür sorgt, daß die aneinandergrenzenden Lagen nicht ineinanderrutschen können. Dieses gewellte Band wird von einem Antriebs- bzw. Bremswalzenpaar (18) in der eigentlichen Wickeleinrichtung (20) erfaßt und dann durch ein Schneidwalzenpaar (19) geführt und anschließend durch Aufwickeln in Richtung des Pfeiles (25) etwa zu einer Zylinderform gewickelt, wie sie in Fig. 12 dargestellt ist. Ist die Zylinderform erreicht, so wird das Band (1) jeweils durch nicht dargestellte Abtrenneinrichtungen vom nachfolgenden und erneut wieder aufzuwickelnden Bandteil abgeschnitten.

Der so erhaltene Zylinderkörper wird dann in ein Mantelrohr eingeschoben und mit diesem in bekannter Weise fest verbunden, was beispielsweise durch Verlöten geschehen kann. Dieser mit dem Mantelrohr (23) umgebene fertige Trägerkörper ist im Querschnitt in Fig. 13 anhand eines Ausführungsbeispieles dargestellt.

Aus der Fig. 2 wird erkennbar, daß das gewellte Metallband (1), dessen Wellungen hier nicht gezeigt sind, in dem Schneidwalzenpaar (19) mit Einschnitten (2, 2′) versehen wird, die jeweils von den beiden Längsrändern (1a, 1b) des Metallbandes (1) ausgehen und unter einem Winkel (α) schräg zur Längsachse des Metallbandes (1) über die Mitte des Metallbandes hinaus eingeschnitten sind. Die jeweils von gegenüberliegenden Längsrändern (1a bzw. 1b) ausgehenden Einschnitte (2 und 2′) stehen dabei bei diesem Ausführungsbeispiel senkrecht aufeinander. Die Einschnittwinkel (α) sind jeweils für die Einschnitte (2 und 2′) gleich groß und verlaufen beim Ausführungsbeispiel unter 45°. Es ist natürlich auch möglich, andere Winkel vorzusehen. Diese Einschnittanordnung ergibt aber eine weitgehende Unterteilung des Metallbandes (1) auf seiner Fläche, die es dem Zylinderkör per (24) (Fig. 12) nach dem Wickeln erlaubt, sich verhältnismäßig frei ausdehnen und Dehnungen in sich aufnehmen zu können, wenn im Betrieb zwischen dem äußeren Mantelrohr und dem inneren Wickelkörper Temperaturunterschiede auftreten. Die Einschnitte (2 bzw. 2′) sind jeweils von Stellen aus in das Metallband (1) eingeschnitten, die einen gleichen Abstand (a) zueinander aufweisen. Möglich ist es allerdings auch, die Einschnitte in ungleichen Abständen zueinander anzuordnen. Das könnte nach einer bestimmten Gesetzmäßigkeit, z.B. nach einer arithmetischen Reihe erfolgen, so daß sich bestimmte Muster auf der Stirnseite des fertigen Metallträgers ergeben.

Die Fig. 3 zeigt eine andere Möglichkeit, die aber zu einem ähnlichen Ergebnis führen kann. Hier sind die Einschnitte (2) ebenfalls in gleichem Abstand (b) zueinander von dem Längsrand (1a, 1b) aus parallel zueinander in das Band eingeschnitten. Es sind jedoch keine von der anderen Seite ausgehenden Einschnitte (2′) versetzt zu diesen Einschnitten so vorgesehen, daß die gegenüberliegenden Einschnitte jeweils untereinander auf Lücke stehen. Vielmehr sind die vom anderen Längsrand (1a) ausgehenden Einschnitte (2′) hier - in der Bandlängsrichtung gesehen in einem anderen Bereich angeordnet, der in seiner Länge allerdings jeweils so bemessen sein sollte, daß sie mindestens der Länge (E) zwischen dem Schnittwalzenpaar (19) und der Aufwikkelachse (Fig. 1) + π mal einem mittleren Durchmesser des fertigen Zylinderkörpers entspricht, der aus dem Band gewickelt wird. Es besteht dann die Gewähr, sich die Lage der Einschnitte (2, 2′) in aneinandergrenzenden Lagen des gewickelten Körpers genügend oft ändert, um den gewünschten gleichmäßigen Wärmedehnungsausgleich innerhalb des gewickelten Körpers zu ermöglichen.

Die Fig. 4 und die Fig. 5 zeigen Möglichkeiten, Einschnitte (3 bzw. 5) in dem Metallband (1) vorzunehmen, die ähnlich den Einschnitten (2, 2′) schräg zur Längsachse und im gleichen Abstand (c) zueinander jeweils von den Längsrändern aus nach innen verlaufen. Die Einschnitten (3, 3′ bzw. 5, 5′) sind aber nur so lang ausgebildet, daß ihre geschlossenen Enden (21) nicht bis zur Mitte des Metallbandes (1) reichen. An diesem geschlossenem Ende laufen die Einschnitte (3, 3′, 5, 5′) jeweils in einer Bo genform (21) aus. Ihre Neigung zur Längsachse des Bandes (1) kann beim Ausführungsbeispiel der Fig. 4 im Winkel (β) der Ausführungsformen der Fig. 3 entsprechen. Selbstverständlich sind aber auch andere Winkel möglich. Es ist außerdem möglich, daß jeweils zwischen den längeren Einschnitten (3, 3′), die innen in dem Bogen (21) enden, noch kleinere Einschnitte (3 bzw. 3′) verlaufen und in der Mitte des Abstandes (c) zwischen zwei Einschnitten (3bzw. 3′) vorgesehen sind.

Beim Ausführungsbeispiel der Fig. 5 sind die Einschnitte (5,5′) senkrecht zur Längsrichtung des Metallbandes (1) verlaufend gelegt. Auch hier können jeweils in der Mitte zwischen zwei längeren Einschnitten (5, 5′) kürzere Einschnitte (6) vorgesehen werden. Die später noch erläuterte Ausführungsform der Fig. 11 besitzt ebenfalls Einschnitte (12, 12′), die schräg zur Bandlängsrichtung aber nicht bis zur Mitte des Bandes (1) verlaufen.

Die Fig. 6 bis 10 dagegen zeigen Ausführungsformen von Bändern, bei denen Einschnitte (7,8,9,10,11) nicht von den Längsrändern des jeweiligen Bandes (1) ausgehen, sondern in der Bandmitte angeordnet sind. So zeigt die Fig. 6 eine Ausführungsform, bei der Einschnitte (7, 7a) jeweils unter einem gleichen Winkel aber entgegengesetzter Richtung zueinander in der mitte des Bandes so eingeschnitten sind, daß sie etwa pfeilförmig zueinander verlaufen. Die Einschnitte könnten auch in sich gerade ausgeführt sein. Die Fig. 7 zeigt eine Ausführung, bei der Einschnitte (8) schräg zur Längsrichtung in der Mitte des Bandes (1) angeordnet werden. Eine ähnliche Ausführung zeigt die Fig. 9, nur daß hier sich die schrägen Einschnitte (8) mit schrägen, aber in sich geraden Einschnitten (10) abwechseln, die in gleicher Länge unter gleichem Winkel zur Längsachse des Bandes (1) angeordnet sind, jedoch entgegengesetzt zu den Einschnitten (8) verlaufen. Die Fir. 8 zeigt ein Metallband (1), bei dem U-förmige Einschnitte (9) in die Mitte des Bandes gelegt sind, die aus jeweils zwei parallel zu den Längsrändern (1b, 1a) verlaufenden Schenkeln (9a, 9b) und aus einem diese beiden Schenkel verbindenden Steg (9c) aufgebaut sind. Der Steg (9c) verläuft senkrecht zu den Schenkeln (9a und 9b). Diese Art von Einschnitten ergibt einzelne Lappen (27), die sich beim Wickeln des Bandes (1) aus diesem herausspreizen können, die dadurch zum einen für einen guten Halt des Wickelkörpers sorgen können, zum anderen aber auch die Möglichkeit geben, daß sich aneinandergrenzende Lagen bei Wärmedehnungen gegeneinander ausdehnen können.

Die Fig. 10 zeigt eine Ausgestaltung, bei der ein Metallband (1) mit bogenförmigen Einschnitten (11a, 11b) versehen ist, die zusammen in der Art einer Sinuslinie im mittleren Bereich des Bandes (1) verlegt sind, jedoch jeweils durch nicht eingeschnittene Stegabschnitte (22) voneinander getrennt sind.

Die Fig. 11 schließlich zeigt eine Ausführung ähnlich Fig. 4, nur daß hier die Einschnitte (12, 12'), die hier unter einem Winle (γ) zur Längsrichtung (26) des Bandes (1) verlaufen und die einen gegenseitigen Abstand (d) zueinander aufweisen, nicht in die bogenförmigen Endabschnitte (21) übergehen, sondern ausschließlich gerade verlaufen.

Die Fig. 12 zeigt einen Zylinderkörper, der mit einem Metallband (1) gemäß Fig. 11 durch Wickeln hergestellt ist.

Die Fig. 13 zeigt diesen Zylinderkörper (24), der nach seiner Herstellung in ein Mantelrohr (23) eingeschoben und mit diesem fest verbunden ist. Man erkennt aus der Querschnittdarstellung, daß jeweils die zu den Stirnseiten, d.h. zu den Längsrändern (1a, 1b) offenen Enden der Einschnitte (12) relativ unregelmäßig über dem Querschnitt verteilte Öffnungen bilden, die jeweils Raum für die Ausdehnung des Trägerkörpers bieten, wenn Temperaturunterschiede zwischen Mentalrohr (23) und dem Zylinderkörper (24) zu erwarten sind.

Die Herstellung der aufzuwickelnden, oder auch zu faltenden Metallbänder (1) ist verhältnismäßig einfach. Für die Herstellung von Bändern gemäß Fig.3 könnten der Wickeleinrichtung (20) noch zusätzliche Schneidwalzen (19') zugeordnet werden, die abwechselnd mit dem Schneidwalzenpaar (19) arbeiten. Ein Schneidwalzenpaar könnte dann jeweils die Einschnitte (2) über einen bestimmten Längenabschnitt vornehmen, wonach das zweite Schneidwalzenpaar die Einschnitte (2') vornimmt. Die Ausbildung solcher Schneidwalzenpaaren ist einfach und bekannt. Es ist natürlich auch möglich, den Trägerkörper nicht, wie hier in Fig. 1 angedeutet, nur aus einem einzigen gewellten Band herzustellen, sondern jeweils aus einem glatten und einem gewellten Band die in bekannter Weise aneinanderliegend aufgewickelt werden. In diesem Fall müßten der Wickeleinrichtung (20) die Bänder auf verschiedenen Wegen zugeführt werden, wenn beispielsweise nur das glatte Band mit den Einschnitten versehen, das gewellte Band dagegen ohne Einschnitte bleibt. Natürlich ist es auch möglich, beide Bänder vor dem Wickeln einzuschneiden, wobei dann der eigentlichen Wickeleinrichtung eben zwei Schneidwalzenpaare für die beiden jeweils von einem Coil abgewickelten Metallbänder zugeordnet werden müssen. Zu beachten ist auch, daß es sehr vorteilhaft ist, wenn der Abstand (á bzw. b, c oder d) zwischen den einzelnen Einschnitten, die vom Längsrand des Bandes ausgehen, maximal der Hälfte des Durchmessers des Zylinderkörpers (24) mal π entsprechen. Es hat sich gezeigt, daß dann eine für den Wickelvorgang ausreichende Festigkeit vorliegt, dennoch aber die gewünschte Ausdehnungsfähigkeit für den Trägerkörper erreicht wird.

**Ansprüche**

1. Verfahren zur Herstellung eines Trägerkörpers für einen katalytischen Reaktor zur Abgasreinigung, insbesondere von Verbrennungsmotoren in Kraftfahrzeugen, bei dem gewellte oder gewellte und glatte Metallbänder zu aneinandergrenzenden Lagen gewickelt oder gefaltet, und in einem Mantelrohr (23) befestigt mit quer zu ihrer Längsrichtung verlaufenden Schlitzen versehen werden, dadurch gekennzeichnet, daß die Schlitze zunächst in Form von Einschnitten (2 bis 12) unmittelbar in den Metallbändern (1) angebracht werden und daß die Metallbänder (1) erst danach zu ihrer Endform gewickelt oder gefaltet und dann in das Mantelrohr (23) geschoben werden.

2. Verfahren nach Anspruch 1, dadurch gekennzeichnet, daß mindestens ein Längsrand (1a) der Metallbänder (1) an hintereinander liegenden Stellen eingeschnitten wird.

3. Verfahren nach Anspruch 2, dadurch gekennzeichnet, daß die Einschnitte (2, 2′, 3, 3′, 4, 5, 5′, 6, 12, 12′) jeweils im gleichen Abstand (a, b, c, d) zueinander vorgenommen werden.

4. Verfahren nach den Ansprüchen 2 und 3, dadurch gekennzeichnet, daß die Einschnitte (2, 2′, 12, 12′) gerade, parallel zueinander und unter einem spitzen Winkel (α bzw. β) zum Längsrand (1a) des Metallbandes (1) vorgenommen werden.

5. Verfahren nach Anspruch 4, dadurch gekennzeichnet, daß die Einschnitte (2, 2′, 3, 3′) gegeneinander geneigt angelegt werden.

6. Verfahren nach Anspruch 5, dadurch gekennzeichnet, daß die von gegenüberliegenden Längsrändern (1a, 1b) ausgehenden Einschnitte (2, 2′, 3, 3′, 12, 12′) jeweils im gleichen Abstand (a, b, d) zueinander auf Lücke versetzt werden.

7. Verfahren nach einem der Ansprüche 1 bis 6, dadurch gekennzeichnet, daß die Einschnitte (3, 3′, 12, 12′) nicht über den mittleren Bereich der Metallbänder (1) hinausgelegt werden.

8. Verfahren nach Anspruch 7, dadurch gekennzeichnet, daß die Einschnitte (3, 3′, 5, 5′) an ihrem geschlossenen Ende jeweils in einen in Bandlängsrichtung auslaufenden Bogen (21) übergehen.

9. Verfahren nach einem der Ansprüche 1 bis 6, dadurch gekennzeichnet, daß die Einschnitte (2, 2′) über die Mitte des Metallbandes (1) hinausgeführt sind.

10. Verfahren nach Anspruch 1, dadurch gekennzeichnet, daß die Metallbänder (1) in ihrer Mitte mit den Einschnitten (7, 8, 9, 10, 11) versehen werden.

11. Verfahren nach Anspruch 10, dadurch gekennzeichnet, daß schräg zur Bandlängsachse verlaufende gerade Einschnitte (8, 10) durchgeführt werden.

12. Verfahren nach Anspruch 10, dadurch gekennzeichnet, daß U-förmige Einschnitte (9) mit parallel zu den Bandrändern (1a, 1b) verlaufenden Schenkeln (9a, 9b) und einem quer dazu angeordneten Steg (9c) vorgenommen werden.

13. Verfahren nach Anspruch 10, dadurch gekennzeichnet, daß bogenförmige Einschnitte (11a, 11b) eingebracht werden.

14. Verfahren nach Anspruch 13, dadurch gekennzeichnet, daß mehrere bogenförmige Einschnitte (11a, 11b) in der Form einer Sinuslinie jeweils unter Dazwischenschaltung eines uneingeschnittenen Teilstückes (22) hintereinander gelegt werden.

15. Verfahren nach einem der Ansprüche 1 bis 14, dadurch gekennzeichnet, daß die Einschnitte (2 bis 12) in den glatten Metallbändern vorgesehen werden.

16. Vorrichtung zur Durchführung des Verfahrens nach einem der Ansprüche 1 bis 15, bei der das oder die Metallbänder (1) von einem Coil (13) abgewickelt und in einer Wickel- oder Falteinrichtung (20) zu dem Trägerkörper gewickelt oder gefaltet werden, dadurch gekennzeichnet, daß der Wickel- oder Falteinrichtung (20) ein Schneidwalzenpaar (19) vorgeschaltet ist, dessen Umfang miteinander korrespondierenden Stanz- oder Schneidprofilen versehen ist.

EP 0 316 596 A2

**Fig. 1**

13  14  15  16  17  1  18  19  19'  25  20  E

**Fig. 2**

2  1  1b  α  α  a  a  2'  1a

**Fig. 3**

1  1b  2  b  β  b  2'  1a

**Fig. 4**

3  1b  1  21  c  3'  21  4  1a  β  21

**Fig. 5**

1  5  5'  6

Fig. 6

Fig. 7

Fig. 8

Fig. 9

Fig. 10

Fig. 11

Fig. 12

Fig. 13